# EUROPEAN PATENT APPLICATION

(11) **EP 4 686 416 A1**
(43) Date of publication of application: **04.02.2026**
(21) Application number: 24020249.9
(22) Date of filing: 29.07.2024
(51) Int. Cl.: A23L 2/52, A23L 33/10, A23L 33/115, A23L 33/12, A23L 33/135, A23L 33/15, A23L 33/175

(54) **ENERGY DRINK WHICH, THROUGH ITS INGREDIENTS, INCREASES COGNITIVE POTENTIAL AND ENERGY PHYSICAL WITH RELAXING EFFECTS**

(71) Applicant: Ponzini, Sergio, 90047 Partinico (PA) (IT)
(72) Inventor: Ponzini, Sergio, 90047 Partinico (PA) (IT)

(57) **Abstract**

**Summary**

This invention concerns a new and original energy drink, which stands out from the previous ones for the addition to the composition of coenzyme q10, choline, and a probiotic, Lactobacillus plantarum zdy04, and for the elimination or reduction of the dosage of caffeine to a dose that can be drunk by everyone, even children and pregnant women. The drink also contains molecules already present in other similar formulations such as MCT (medium chain triglycerides), acetyl-canitine and taurine.

The new components tend to increase the energy and cognitive performance of those who drink while the probiotic benefits the heart and vessels and lowers the serum TMAO (TriMethylAmine-N-Oxide), potentially proatherogenic, deriving from the intestinal metabolism of two components of the drink, acetyl -carnitine and choline, common to other drinks and supplements. But beyond this, the drink overcomes the criticism leveled at traditional energy drinks, which generally combine high doses of caffeine with taurine, as eliminating or leaving caffeine at a maximum dosage of 100 mg/day eliminates the risks of cardiac fatigue and risk of arrhythmia from the usual doses of caffeine in many energy drinks. Furthermore, the dosage of taurine, which has a gabaergic and therefore soothing and relaxing effect, being not coupled with caffeine makes the drink original as it induces an anxiolytic effect while maintaining the energetic action.

Therefore, taking the drink is advantageous, for example, in stressful working environments, to increase resistance performance, and, given that it increases the ability to carry out work and counteract the radicals of oxidative stress, it makes the mind of those who use it more attentive use and with increased cognitive potential but in a cerebral context of gabaergic and therefore relaxing stimulation. In this way, the drink can be used in a transversal way, from children, to pregnant women (potentially), to athletes, workers, scholars, and could certainly have a positive impact on activities that require high performance as these will be facilitated by the drink, which also induces a sense of relaxation in contrast to current energy drinks.

Within the drink, an alternative formulation involves the replacement of taurine with theanine, a molecule with relaxing and anxiolytic properties with similar gabaergic functions, or their combination in addition to the composition of the drink.

Finally, the drink contains MCTs which stimulate weight loss because the betahydroxybutyrate deriving from the metabolism of MCTs gives a sense of satiety but also because the composition of the drink as a whole stimulates catabolism and in particular the catabolism of fatty acids.

## Description

The energy drink in question is a mixture of water-soluble and fat-soluble components. The mixture leads to the distinction of a superficial phase, more cloudy given by medium chain fats and coenzyme q 10 and an underlying phase on a water basis in which acetylcarnitine, taurine and L theanine are present. The energetic combination of coenzyme q10, acetylcarnitine and MCT is a novelty in energy drinks.

More specifically, the energizing drink requires that of the MCTs octanoic acid and decanoic acid but also only octanoic acid are present in a quantity between 1 g/Liter and 100g/liter more preferably 30g/Liter.

Acetylcarnitine is present in a quantity between 1 g/Liter and 9g/Liter, more preferably 6 g/Liter.

Coenzyme q 10 is present in a quantity between 100mg/Liter and 1000mg/Liter, more preferably 600 mg/Liter.

Taurine is present in a quantity between 1g/Liter and 9g/Liter more preferably 6g/Liter.

Theanine is present in a quantity between 10 mg/litre and 1 g/litre, more preferably 300 mg/litre.

Choline can be added to these components to exploit its positive effects on cognition and mood.

The combination also including choline and acetylcarnitine increases serum TMAO, which is positively correlated with cardiovascular risk and only in this case it is recommended to make a probiotic drink enriched with Lactobacillus Plantarum ZDY04, the intake of which reduces atherosclerotic lesions and lowers drastically the serum TMAO. Given that the objective is to create an energy drink that brings cardiovascular benefits, only in the case of association of choline with acetylcarnitine is the addition of the probiotic recommended because the TMAO deriving from the microbial metabolism of acetylcarnitine alone does not represent a problem since this value it also changes with diet and depends on the composition of the microbiome. In fact, foods containing choline and acetylcarnitine are not necessarily related to an increase in TMAO but this depends on the presence of TMAO-producing strains that more easily colonize the intestine of those who, for example, are used to a diet rich in meat. Furthermore, foods such as fish that reduce cardiovascular risk increase serum TMAO.

We recommend an absence of caffeine or its presence in low doses so that the drink is not exciting, since energy is guaranteed by MCT, acetylcarnitine and coenzyme q 10.

You can add the group of B vitamins, in particular vitamin B9, vitamin B6 and vitamin B12 or at least one of these.

For its gabaergic and relaxing effects, the addition of magnesium is recommended.

The energizing drink can include flavoring substances, sweetening substances, coloring substances, carbon dioxide.

There are many energy drinks on the market, many of which are rich in caffeine and sugar, but there are some without these two components, and which claim to be beneficial for health. There is no energy drink that, even without the excitatory effect of caffeine, can increase energy by improving energy metabolism and promoting the combustion of long-chain fatty acids using medium-chain fatty acids as an energy substrate. In fact, the new energy drink uses MCTs (medium-chain triglycerides) as a rapidly used energy substrate, which in addition to increasing energy promotes the metabolism of long-chain fatty acids whose transport from the cytosol to the mitochondrion for subsequent beta-oxidation is increased by the presence of acetylcarnitine. Finally, the metabolism of fatty acids is optimized by coenzyme q 10 which participates in mitochondrial oxidative phosphorylation. The presence of MCTs, acetylcarnitine, coenzyme q 10, is the novelty compared to the current state of energy drinks.

The invention aims to create an energy drink that increases both physical and mental energy and that transmits to the consumer a sense of well-being and calm. In addition to the effect resulting from its consumption, however, the ingredients of the composition were also chosen because, by virtue of the pleiotropic characteristics of each individual molecule, the drink has long-term effects. In fact, if the drink is frequently consumed, it improves the lipid, glycemic, and blood pressure axis, and therefore prevents metabolic syndrome or improves its clinical and laboratory picture, also by virtue of its slimming properties. In fact, if its consumption is accompanied by an adequate lifestyle and food intake, the energy drink reduces cardiovascular risk and also oncological risk. Furthermore, the drink responds to the criticisms leveled at most of the similar products currently on the market, which are based on two points: high dose of caffeine and high dose of sugar.

The high concentration of caffeine generally present in energy drinks, which does not take into account the recommended daily doses, also considering the widespread consumption of coffee, can cause side effects ranging from anxiety and psychomotor agitation, to an increased risk of myocardial ischemia, especially during physical activity. This is mainly due to the adrenergic discharge favored by caffeine, which leads to an increase in systemic blood pressure and heart rate, correlated with an increase in arrhythmic risk. At high doses of caffeine, the problem of tolerance and dependence must also be taken into consideration: both physical, which manifests itself with withdrawal symptoms such as tachycardia, sweating and agitation; and psychological, which manifests itself with the phenomenon of craving, linked to the activation of the meso-corticolimbic dopaminergic pathway that regulates reward mechanisms.

It is also true that at low doses caffeine shows beneficial effects on brain activity, so the new drink takes into account the possibility of its presence at a dosage no greater than 100 mg, since this dose corresponds to the maximum dose that can be taken by children and is in any case lower than the maximum dose of caffeine that can be taken by a pregnant woman (200 mg / day). In fact, one of the objectives of the drink is its widespread diffusion, so that it benefits anyone who takes it.

The problem of sugar is represented, in addition to the risk of type 2 diabetes and obesity, by the potential increase in mortality especially for cardiovascular etiology. It is known that the intake of excess carbohydrates is related to metabolic syndrome, especially for the establishment of insulin resistance mechanisms and for the induction of an increase in visceral fat, which leads to a state of chronic low-grade inflammation. The new drink provides not only the absence of sugar, but also the presence of ingredients that contribute to reducing inflammation and oxidative stress. The potential beneficial effects therefore include a reduction in individual risks of death from cardiovascular and oncological causes, as well as a reduction over time in physiological degenerative processes by age, in the case of frequent and regular intake. The drink must have anti-inflammatory and antioxidant properties as well as energizing. The main cause of death in the Western world is cardiovascular, represented by myocardial infarction, which has as its predominant etiology the formation of an occlusive thrombus in the coronary circulation, which in turn derives from a pre-existing atherosclerotic plaque. Atherosclerotic plaques form slowly over the years, and their genesis has a predominant impact on the level of inflammation and oxidative stress produced daily, also by virtue of lifestyle and type of diet. In fact, diets that expose to a health risk are rich in high glycemic index carbohydrates and long-chain saturated fats, since both increase mitochondrial oxidative stress and low-grade inflammation. Therefore, the drink has a protective effect against unhealthy diets. The drink can be useful for losing weight, since it promotes the catabolism of fatty acids and induces a feeling of satiety, given by beta-hydroxybutyrate. Furthermore, it reduces the risk of cancer, the second leading cause of death in the world, because, thanks to its anti-inflammatory and antioxidant properties, it improves the efficiency of the immune system. In conditions of chronic inflammation and oxidative stress, in fact, free radicals are produced, causing tissue damage and potential damage to DNA, with a consequent increased risk of carcinogenesis. If we consider that even the body of a healthy person produces tumor cells several times during life, which our immune system recognizes and eliminates, preventing their proliferation, we understand the importance of an efficient immune system and the benefits of a drink capable of promoting its correct functioning.

Another novelty of the drink consists in the anxiolytic and relaxing properties given by the gabaergic effect of some of its ingredients.

In short, the combination of ingredients of the drink is designed to give it anti-inflammatory and antioxidant, anti-tumor, energizing, slimming, anxiolytic-relaxing properties.

The ingredients of the drink (or possible combinations thereof) are: MCT, acetyl carnitine, coenzyme Q10, taurine, L-theanine, choline, the probiotic Lactobacillus plantarum ZDY4, B vitamins, magnesium and low-dose caffeine.

The energizing characteristics typical of energy drinks must materialize in greater physical energy and greater mental energy.

MCTs (C8 caprylic acid and C10 capric acid) have a predominantly energetic function estimated at 8.3 kcal/g, but unlike long-chain fatty acids, medium-chain triglycerides are easily digested by gastrointestinal lipases and, once absorbed, reach the liver directly via the portal circulation, without passing through the lymphatic system. This ensures that their metabolism is rapid and increases energy yield just as quickly. Furthermore, MCTs are ketogenic because their metabolism produces beta-hydroxybutyrate. MCTs and beta-hydroxybutyrate can be used by the brain as an energy source instead of glucose, and this potentially determines positive effects on cognitive function. This is demonstrated by studies that show how with age the brain's ability, especially of the frontal cortex, to metabolize glucose decreases. Therefore, the intake of MCTs can potentially promote healthy brain aging and prevent neurodegenerative diseases such as Alzheimer's disease. Furthermore, MCTs increase muscle strength and improve muscle energy production by improving, together with beta-hydroxybutyrate, mitochondrial function. Finally, they have a slimming effect, because most MCTs are immediately oxidized by the liver, preventing the synthesis of triglycerides in adipose tissue, and because they increase thermogenesis, activating brown adipose tissue; furthermore, according to some hypotheses, medium-chain fatty acids could have a direct metabolic impact on adipocytes, as can be seen from changes in gene expression of lipogenic enzymes. Beta-hydroxybutyrate also participates in the slimming effect thanks to its satiety effect.

From an energetic point of view, acetyl carnitine, once absorbed, is converted into L-carnitine at an intracellular level, which is responsible for facilitating the transport of long-chain fatty acids from the cytoplasm to the mitochondrial matrix for its beta-oxidation and consequent production of ATP.

The acetyl portion, on the other hand, can be oxidized to produce energy, can be used for the synthesis of acetylcholine, or can be incorporated into glutamate, glutamine and GABA or, again, incorporated into lipids to promote, for example, myelination and cell growth. Therefore, in addition to the increase in energy yield due to an improvement in the beta-oxidation of fatty acids, its effect on neurotransmission is important. Furthermore, acetyl carnitine has demonstrated antiepileptic efficacy and a rapid-acting antidepressant function, contrary to traditional antidepressant drugs. In fact, there are some depressions resistant to antidepressant drugs that respond well to acetyl carnitine, so much so that its serum concentrations LC and ALC are considered potential markers of major depression. It should be emphasized that with high intensity exercise, mitochondrial beta-oxidation of fatty acids is limited by free L-carnitine, so that fat oxidation decreases when moving from moderate to intense effort. Therefore, acetyl carnitine is more beneficial for performances where endurance is required.

Coenzyme Q10 plays an important energetic role because it participates in the electron transport chain in the mitochondrion, optimizing the energy yield in ATP resulting from the metabolism of fatty acids and sugars. Furthermore, coenzyme Q10 decreases white fat and increases thermogenic brown fat and promotes weight loss. Since it improves cellular respiration and energy performance, it promotes high-intensity activities, delaying fatigue caused by lactate accumulation. Furthermore, low serum levels of coenzyme Q10 correlate inversely with the severity of fatigue.

The enhancing effect on cellular respiration, ATP synthesis and fatty acid catabolism is also given by taurine, with which improvements in both aerobic and anaerobic exercise are demonstrated.

L-theanine, a free amino acid present in green tea, has been shown to have a positive cognitive effect on memory, attention and verbal fluency because it acts as a glutamate reuptake inhibitor, behaving as a competitive antagonist of the low-affinity glutamate receptor in the hippocampus. On the other hand, its gabaergic effect on GABA A receptors demonstrates a relaxing and anxiolytic effect and an anti-stress effect, detectable as a lowering of salivary cortisol after intake.

Choline was chosen because it increases cognitive performance, being a precursor of acetylcholine; but it is also a precursor of membrane phospholipids and betaine, which lowers homocysteine values, a marker of cardiovascular risk and dementia. Choline can also be taken by pregnant women, since it has been shown that its intake in the second month of pregnancy allows for optimal development of the fetal brain. In fact, it is thought that the higher IQ of breast-fed children may be related to higher levels of choline than formula-fed children. A deficiency of choline is related (similarly to folic acid deficiency) to an increased risk of spina bifida and brain and craniofacial anomalies.

From the point of view of cardiovascular health, if the combination of ingredients includes both choline and acetyl carnitine, the addition of the probiotic Lactobacillus plantarum is recommended. This is because both substances are metabolized by the intestinal microbiota with the production of trimethylamine (TMA), which in the liver is converted into trimethylamine-N-oxide (TMAO), whose serum elevations are correlated with increased renal and cardiovascular risk. In fact, TMAO is proatherogenic (increases platelet aggregation, promotes the formation of oxidized LDL, and increases the deposition of foam cells), is proinflammatory and increases insulin resistance. Lactobacillus plantarum would lower the levels of intestinal TMA and serum TMAO, correlating with a reduction in cardiovascular risk, as demonstrated by studies on atherosclerotic lesions in Apo E -/- mice. Therefore, the solution to the problem of TMAO resulting from the integration of choline and acetyl carnitine is given by the probiotic.

The reduction of cardiovascular risk is a central point of the new drink, in fact several studies support that the components of the drink contribute to lowering blood pressure (in particular, coenzyme Q10, taurine, L-theanine, MCT, through betahydroxybutyrate) and to improving cardiac function, with an anti-compensation function performed by betahydroxybutyrate and coenzyme Q10. Both, in fact, regulate the heart rate and increase cardiac output with demonstrated (in particular, for Q10) grade improvements in the NYHA classification of heart failure with low ejection fraction, and ultimately improving the quality of life of patients. Some studies have also observed a correlation between taurine deficiency and the development of cardiomyopathy. A cardioprotective effect has been demonstrated in particular for coenzyme Q10 (but it is also valid for acetylcarnitine), where it is recorded, in double-blind studies on animals, with one group receiving the supplement and another not, under the same experimental conditions that guarantee the same deficit of myocardial perfusion, that the ischemic lesion is smaller in those taking the coenzyme. This is due to the fact that coenzyme Q10, improving energy efficiency, leads to a greater rescue of compromised cardiomyocytes. A reduction in relapses has also been demonstrated in those suffering from atrial fibrillation, probably because coenzyme Q10 supplementation is associated with a reduction in malondialdehyde values. The problem of difficult intestinal absorption of the coenzyme is partly solved by the presence of MCTs, in fact medium-chain triglycerides facilitate intestinal absorption of lipophilic coenzyme Q10.

Cardiovascular risk is also reduced by the lipid-lowering effect of the drink, which would have a potential anti-atherosclerotic plaque effect, due to the reduction of LDL and serum triglycerides and, to a lesser extent, to the increase in HDL. The lipid-lowering effect is given by all the principles, even by MCTs, whose consumption is comparable, in terms of the ability to lower LDL and total cholesterol, to the consumption of olive oil. For this reason, the drink, thanks above all to the effects of acetyl carnitine and coenzyme Q10, prevents hepatic steatosis or improves its pathological picture, and could also have an impact on the percentage of steatohepatitis (a part of steatotic livers will in fact evolve into liver with inflammatory infiltrate); therefore, it could, if drunk frequently and constantly, reduce complications, such as fibrosis, cirrhosis and hepatocarcinoma. The lipid-lowering effect of taurine is also due to the fact that it increases the production of bile acids, to the detriment of cholesterol. It is worth remembering that the muscular side effects of statins (fatigue and muscle pain), administered to correct dyslipidemia, are thought to be due to a lowering of muscle coenzyme Q10, so its integration is important during lipid-lowering therapy.

The drink also has a hypoglycemic effect, just think of the anti-diabetic activity of acetyl carnitine which improves the tissue absorption of blood glucose, as well as promoting the oxidation of glucose; or L-theanine which improves insulin secretion, improving the trophism of pancreatic beta cells, but also decreasing intestinal absorption of glucose.

The slimming, hypoglycemic, hypolipidemic, antihypertensive properties make the new drink useful for preventing, but also for improving, the picture of metabolic syndrome. Several studies have shown that metabolic syndrome increases the risk of cancer, cardiovascular risk (which is twice as high as in a healthy control) and the risk of type 2 diabetes (about five times higher).

All this must be considered in light of the latest epidemiological data, according to which in Europe and the United States about one in three people suffer from metabolic syndrome.

What is also interesting is that the drink, through its components coenzyme Q10, acetyl carnitine and taurine, improves both male reproductive function (qualitative and quantitative aspects of spermatozoa) and ovarian function and is useful in the treatment of polycystic ovary, which can always be considered related to metabolic syndrome.

Finally, among the most important aspects of the drink, its antioxidant and anti-inflammatory properties are once again highlighted, determined to varying degrees by all the chosen principles, which prevent pathologies caused by oxidative stress and inflammation; in particular, several studies identify neuroinflammation as the fertile ground for the development of Parkinson's and Alzheimer's. In this regard, it is important to highlight that all the ingredients prevent and reduce the formation of cerebral amyloid plaques; also for this reason, the use of the drink is indicated to improve mental health and promote better brain aging. The importance of taurine is highlighted, which is required for the folding and stabilization of the three-dimensional structure of proteins (e.g. receptors, enzymes, etc.) and, at the same time, is important in preventing the deposition of beta amyloid and alpha synuclein in the brain, therefore in the prevention of Alzheimer's and Parkinson's respectively. Inflammation and mitochondrial oxidative stress, with excessive production of ROS, leads to fibrosis, tissue damage, aging, carcinogenesis and disease; therefore, it is hoped that daily consumption of the drink will increase longevity and psycho-physical well-being.

The latter is also favored by L-theanine which is GABAergic, together with the GABAergic contribution of MCT, betahydroxybutyrate, taurine. The GABAergic effect also makes the drink neuroprotective, given the anti-epileptic importance of the amino acid GABA. In conclusion, the drink, thanks to its components, has relaxing and calming properties, but also antiepileptic, anti-inflammatory, antioxidant, slimming, energizing properties, and is a panacea in the prevention of individual oncological and cardiovascular risk, if taken daily.

It is noted that some molecules of the drink also have epigenetic mechanisms of action, so some benefits are long-lasting, and this applies for example to betahydroxybutyrate and acetylcarnitine.

## Claims

1. Energy drink including medium chain triglycerides (MCTs), acetyl carnitine, coenzyme Q10, taurine and L theanine.

2. Beverage according to claim 1 wherein the MCTs are composed of octanoic and decanoic acid or only octanoic acid.

3. Beverage according to claims 1 and 2 in which the MCTs are present in a quantity between 1 g/litre and 100 g/litre, more preferably 30 g/litre

4. Beverage according to the previous claims in which acetyl carnitine is present in a quantity between 1g/litre and 9g/litre, more preferably 6g/litre

5. Beverage according to the previous claims in which coenzyme Q10 is present in a quantity between 100mg/litre and 1000mg/litre, more preferably 600 mg/litre

6. Beverage according to the previous claims in which taurine is present in a quantity between 1 g/litre and 9 g/litre, more preferably 6 g/litre

7. Beverage according to the previous claims in which theanine is present in a quantity between 10 mg/litre and 1 g/litre, more preferably 300 mg/litre

8. Beverage according to the previous claims wherein the drink further comprises a probiotic capable of reducing the serum TMAO value, preferably Lactobacillus plantarum ZDY04

9. Beverage according to any one of the preceding claims, wherein said beverage further comprises at least one of: magnesium, B vitamins, caffeine and choline.

10. Beverage according to any one of the previous claims, wherein said beverage further comprises at least one of: a flavoring substance, a sweetening substance, a coloring substance, carbon dioxide.

## Amended claims

### Amended claims in accordance with Rule 137(2) EPC.

1. Functional beverage in the form of an oil-in-water emulsion, comprising: medium-chain triglycerides (MCT), coenzyme Q10 in the reduced form (ubiquinol), acetyl-L-carnitine, taurine, L-theanine, formulated to synergistically support the improvement of metabolic parameters associated with the metabolic syndrome and to assist weight loss in subjects following a low-carbohydrate diet.

2. Beverage according to claim 1, wherein the medium-chain triglycerides (MCT) are selected from octanoic acid (C8), decanoic acid (C10) or a mixture thereof.

3. Beverage according to any of the preceding claims, wherein the MCT are present in an amount between 1 g/litre and 100 g/litre, preferably equal to 30 g/litre.

4. A beverage according to any of the preceding claims, wherein acetyl-L-carnitine is present in an amount of between 1 g/litre and 9 g/litre, preferably equal to 6 g/litre.

5. A beverage according to any of the preceding claims, wherein coenzyme Q10 in reduced form (ubiquinol) is present in an amount of between 100 mg/litre and 1000 mg/litre, preferably equal to 600 mg/litre.

6. A beverage according to any of the preceding claims, wherein taurine is present in an amount of between 1 g/litre and 9 g/litre, preferably equal to 6 g/litre.

7. A beverage according to any of the preceding claims, wherein L-theanine is present in an amount of between 10 mg/litre and 1 g/litre, preferably equal to 300 mg/litre.

8. A beverage according to any preceding claim, further comprising choline and a selected probiotic strain including Lactobacillus plantarum ZDY04, capable of reducing serum trimethylamine-N-oxide (TMAO) levels by modulating the intestinal microbiota.

9. A beverage according to any preceding claim, further comprising at least one of: magnesium, B vitamins, caffeine and choline.

10. A beverage according to any preceding claim, further comprising at least one of: a flavouring substance, a sweetening substance, a colouring substance and carbon dioxide.

11. A beverage according to any preceding claim, wherein the formulation is made as an oil-in-water emulsion or nanoemulsion in order to improve the bioavailability of the lipophilic components.

12. Non-therapeutic use of the beverage according to any of claims 1 to 11, to support energy metabolism and counteract the onset of metabolic imbalances in healthy subjects exposed to diets rich in simple sugars and saturated fats, and to promote metabolic balance and body weight control in subjects following a low-calorie diet, in particular the ketogenic diet.
